# EUROPEAN PATENT SPECIFICATION

(11) **EP 1 761 034 B1**
(45) Date of publication and mention of the grant of the patent: **21.10.2009**
(21) Application number: 05781849.4
(22) Date of filing: 26.08.2005
(51) Int. Cl.: H04N 1/32

(54) **METHOD FOR PERFORMING FAX SERVICE AND FAX SERVICE SIGNAL PROCESSING APPARATUS ON GATEWAY**
VERFAHREN ZUR DURCHFÜHRUNG EINES FAXDIENSTES UND FAXDIENSTSIGNALVERARBEITUNGSGERÄT AUF GATEWAYS
PROCEDE DE MISE EN OEUVRE D'UN SERVICE DE TELECOPIE ET APPAREIL DE TRAITEMENT D'UN SIGNAL DE SERVICE DE TELECOPIE SUR UNE PASSERELLE

(30) Priority: 27.08.2004 CN 200410075098
(43) Date of publication of application: 07.03.2007
(73) Proprietor: Huawei Technologies Co., Ltd., Longgang District, Shenzhen Guangdong 518129 (CN)
(72) Inventor: JIN, Tong Huawei Administration Building, Guangdong 518129 (CN)
(74) Representative: Thun, Clemens
(86) International application number: PCT/CN2005/001330
(87) International publication number: WO 2006/021158

(56) References cited:
- EP-A- 1 227 657
- WO-A-01/01654
- WO-A1-01/97503
- JP-A- 6 054 163
- JP-A- 2002 111 954
- JP-A- 2004 015 473
- US-A1- 2003 090 739
- US-A1- 2005 168 785

## Description

### Field of the invention

The present invention relates to the field of network communication technology, and more particularly to a method for realizing facsimile service and a high-speed facsimile service signal processing device.

### Background of the invention

Along with the rapid development of network technology, the technique of transmitting multimedia by utilizing packet technology has come into being. The fusion of the traditional communication technology and the packet technology is more and more obvious. Since the encoding of media stream transmitted in the traditional communication network and that transmitted in the modem packet communication network are different, the coder/decoder (CODEC) is needed at the joint of the traditional network and the packet network to transform the encoding method of media stream, generally this transformation is realized on the gateway.

At present, the media streams processed by the gateway mainly include: voice stream, data stream, video stream, etc. The data stream generally refers to the signal transmitted by such data equipments as conventional facsimile terminal (e.g. standard G3 facsimile terminal), high-speed facsimile terminal (e.g. V.34 facsimile terminal) and modem during interactive process. The main modes adopted for transmitting data stream through the gateway in the field are: the transparent transmission mode, i.e. voice-band data (VBD) mode and the T.38 mode.

In the VBD mode, defined by ITU-T Recommendation V.152, the data stream is transmitted using a codec that passes voice-band modulated signals with minimal distortion. The advantages of the VBD mode are that the realization is simple and it is in no need to care about the meaning of the exact data signal. The disadvantage of the VBD mode is that it is susceptible to the fluctuation of the internet protocol (IP) network, and when more packages are lost and delay variation is great in the IP network, the transmission quality may not be guaranteed. This mode may be applied to the processing of data streams transmitted by various kinds of data equipment.

In the T.38 mode, the facsimile signal transmitted by the facsimile terminals and following the ITU-T Recommendation T.30 is transformed into the T.38 facsimile message suitable for transmission in the IP bearer network according to the ITU-T Recommendation T.38. The advantage of the T.38 mode is that facsimile data stream transmission is insusceptible to various damages appeared in the IP network since the T.38 message is adopted for facsimile data stream transmission, thereby improving the success rate and stability of facsimile service greatly. In order to guarantee the quality of facsimile service provided for users, many gateway manufacturers try their best to adopt the T.38 mode while carrying on the facsimile service nowadays.

The standard G3 facsimile terminal usually supports three kinds of modulation/demodulation way: ITU-T Recommendation V.17, V.29 and V.27, by which the highest speed supported reaches 14400bps. Along with the development of the facsimile technology, the V.34 facsimile terminal with the speed up to 33600 bps is available, and becomes popular in some developed countries and regions. This kind of facsimile terminals adopt the negotiation procedure and the corresponding interactive signaling defined in ITU-T Recommendation V.8, and transmits data in the modulation/demodulation way defined in ITU-T Recommendation V.34. All the types of corresponding data signals are defined in the T.38 protocol. So far, however, almost no gateway can support the high-speed facsimile service yet, because the realization is complicated and the processing ability of the gateway is consumed greatly.

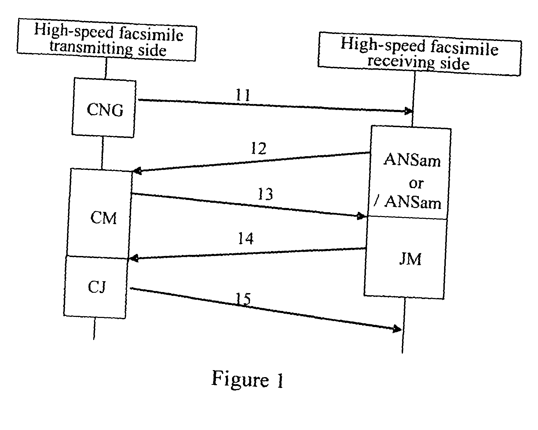

According to the Appendix F of ITU-T Recommendation T.30, the negotiation procedure of the normal high-speed facsimile service, as shown in Figure 1, mainly includes:
Step 11: After entering the facsimile transmission state, the V.34 facsimile terminal at the transmitting side begins to send a CNG (calling tone) to the V.34 facsimile terminal at the receiving side.
Step 12: After entering the facsimile transmission state, the V.34 facsimile terminal at the receiving side begins to send an ANSam (amplitude-modulated answer tone) signal or a /ANSam (amplitude-modulated answer tone with phase reversals) signal to the V.34 facsimile terminal at the transmitting side.
Step 13: After receiving the ANSam or /ANSam signal, the V.34 facsimile terminal at the transmitting side stops transmitting the CNG signal, and starts to transmit a CM (call menu) signal.
Step 14: After receiving the CM signal, the V.34 facsimile terminal at the receiving side stops transmitting the ANSam or /ANSam signal and starts to transmit a JM (joint menu) signal.
Step 15: After receiving the JM signal, the V.34 facsimile terminal at the transmitting side stops transmitting the CM signal to the V.34 facsimile terminal at the receiving side and transmits a CJ (the CM end instruction) signal to the V.34 facsimile terminal at the receiving side.

Then, the V.34 facsimile terminals at the transmitting side and the receiving side go into the high-speed facsimile process. If detecting the ANsam or /ANsam signal, the gateway of the communication network determines that the facsimile terminal at the receiving side is the V.34 facsimile terminal, and processes the facsimile service in the VBD mode according to the preset situation.

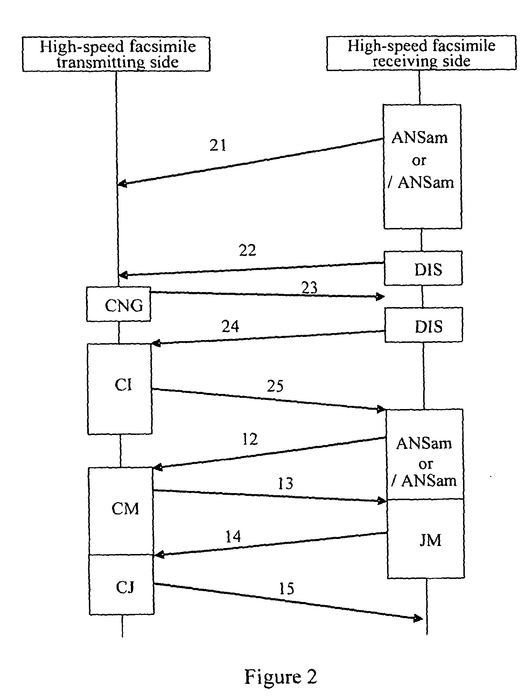

Besides the above-mentioned negotiation process of the high-speed facsimile service, another negotiation process of the high-speed facsimile service also exists. If the facsimile terminal at the transmitting side is unable to receive the first ANSam or /ANSam signal due to entering the facsimile transmission state late or other reasons, the negotiation process of the high-speed facsimile service, as shown in Figure 2, mainly includes:
Step 21: The V.34 facsimile terminal at the receiving side enters the facsimile transmission state at first, begins to transmit the ANSam or /ANSam signal. The V.34 facsimile terminal at the transmitting side didn't receive the ANSam or /ANSam signal for some reasons.
Step 22: If the time distance of sending the ANSam or /ANSam signal exceeds the preset time threshold (2.6~4.0 seconds according to the ITU-T Recommendation V.25), the V.34 facsimile terminal at the receiving side sends a digital identification signal (DIS) continually to the facsimile terminal at the transmitting side. According to the ITU-T Recommendation T.30, the high-speed ability sign (V.8 bit) contained in the DIS is valid, indicating that this facsimile terminal at this side is a V.34 facsimile terminal.
Step 23: After entering the facsimile transmission state, the V.34 facsimile terminal at the transmitting side begins to send the CNG to the V.34 facsimile terminal at the receiving side.
Step 24: After entering the facsimile transmission state, the V.34 facsimile terminal at the transmitting side receives the DIS containing the valid high-speed ability sign.
Step 25: After receiving the DIS containing the valid high-speed ability sign, the V.34 facsimile terminal at the transmitting side needs to return a CI (call indication) signal to the V.34 facsimile terminal at the receiving side to indicate that it is a V.34 facsimile terminal.

After receiving the Cl signal, the V.34 facsimile terminal at the receiving side reinitiates the normal negotiation process of the V.34 facsimile, namely Step 12 to Step 15 shown in Figure 1.

Though there are slight differences in details between the above-mentioned two negotiation processes, they are realized in the VBD mode in fact. Since the facsimile terminal is the data equipment, it will send some special signals during interactive procedure, for instance, ANSam, /ANSam, CM, CI signal. After recognizing the V.34 facsimile terminal through detecting these signals, the gateway switches the way of processing data stream of the user to the VBD mode. In this way, it is in no need to care about the meaning of specific data signal, which conquers the problem of unable to transmit the facsimile signal by adopting the T.38.

Obviously, the disadvantage of this scheme is that the resisting ability of the VBD mode to the network damage is weaker, leading to unstable high-speed facsimile service in the situation of worse network circumstance, which is not acceptable at all to many telecommunication operators and users, especially under the condition that the high-speed facsimile service is widely used. Therefore, if the VBD mode is still adopted for the high-speed facsimile service, more and more users will be unsatisfied with the high-speed facsimile service provided by the telecommunication operators.

WO 01/10654 disclosed a network latency recovery for internet gateways, wherein a network latency value is stored in a timer of a calling modem, and if the network latency value is greater than the network latency threshold the high speed modem connection is terminated and a low speed modem connection is established.

### Summary of the invention

The present invention provides a method for realizing high-speed facsimile service and a facsimile service signal processing device, improving the stability of the high-speed facsimile service transmission in the communication network effectively.

A method according to claim for realizing a facsimile service, wherein a facsimile terminal at a transmitting side negotiates with a facsimile terminal at a receiving side via a gateway, the method includes:
upon receiving a signal of a high-speed facsimile service transmitted by the facsimile terminal at the receiving side, changing, by the gateway, the signal of the high-speed facsimile service to a signal of a facsimile service supported by a T.38 protocol;
sending, by the facsimile terminal at the transmitting side to the facsimile terminal at the receiving side, the facsimile by adopting the T.38 facsimile procedure according to the received signal of the T.38 facsimile service.

The changing by the gateway the signal of the high-speed facsimile service to the signal of the common facsimile service includes:
upon receiving an amplitude-modulated answer tone ANSam signal or an amplitude-modulated answer tone with phase reversals /ANSam signal transmitted by the facsimile terminal at the receiving side, deleting, by the gateway, the ANSam or /ANSam signal
reinitiating negotiation, by the facsimile terminal at the receiving side, through transmitting a DIS with a high-speed ability sign;
upon receiving the DIS transmitted by the high-speed facsimile terminal at the receiving side, changing, by the gateway, the high-speed ability sign contained in the DIS into invalid, and sending the changed DIS to the facsimile terminal at the transmitting side.

The changing by the gateway the high-speed ability sign into invalid includes: setting, by the gateway, the value of the high-speed ability sign contained in the DIS as 0.

The method further includes:
after receiving the ANSam or /ANSam signal, forwarding, by the gateway, an instruction signal CNG transmitted by the facsimile terminal at the transmitting side to the high-speed facsimile terminal at the receiving side before deleting the ANSam or /ANSam signal.

The sending, by the facsimile terminal at the transmitting side to the facsimile terminal at the receiving side, the facsimile by adopting the T.38 facsimile procedure according to the received signal of the T.38 facsimile service includes:
upon receiving the DIS with the invalid high-speed ability sign, entering, by a facsimile terminal at the transmitting side, the T.38 facsimile negotiation procedure, and sending, by the facsimile terminal at the transmitting side to the facsimile terminal at the receiving side, the facsimile to be sent by adopting the T.38facsimile procedure.

A facsimile service signal processing device according to claim 6, applied for a facsimile terminal at a transmitting side negotiating with a facsimile terminal at a receiving side via a gateway, includes:
a detecting unit, adapted to detect a signal passing the gateway, and if detecting a signal of the high-speed facsimile service transmitted by the high-speed facsimile terminal at the receiving side to the facsimile terminal at the transmitting side, send a processing instruction and the signal of the high-speed facsimile service to a processing unit;
the processing unit adapted to change the signal of high-speed facsimile service into a signal of the facsimile service supported by a T.38 protocol upon receiving the processing instruction of the detecting unit and the signal of the high-speed facsimile service.

The detecting unit is adapted to send a first processing instruction and an ANSam or a /ANSam signal to the processing unit if detecting that the signal of the high-speed facsimile service is the ANSam or the /ANSam signal;
the processing unit is adapted to delete the ANSam or the /ANSam signal upon receiving the first processing instruction.

The detecting unit is adapted to send a second processing instruction and a DIS to the processing unit if detecting that the signal of the high-speed facsimile service is the DIS;
the processing unit is adapted to set the value of the high-speed ability sign contained in the DIS as invalid and outputs the DIS to the facsimile terminal at the transmitting side.

The device is located at the same physical entity with the gateway or a physical entity independent to the gateway.

A gateway according to claim 10 includes a facsimile service signal processing device as defined above. -

As can be seen from the above-mentioned scheme, the gateway processes the signals of high-speed facsimile service interacted between the facsimile terminals at the transmitting side and receiving side during the negotiation process, transforms the signals of high-speed facsimile service to the signals of common facsimile service, thus leading the facsimile terminals to enter the common facsimile transmission procedure when the high-speed facsimile service is carried out. Therefore, the high-speed facsimile service transmission can be realized in the T.38 mode, thereby conquering the problem exists in the high-speed service transmission adopting the transparent transmission mode, improving the success rate and stability of facsimile service transmission, and securing the reliability of high-speed facsimile service transmission, in the communication network.

### Brief description of the drawings

Figure 1 is a message sequence chart of the high-speed facsimile negotiation process if the facsimile terminal at the transmitting side enters the facsimile transmission state at first in the prior art.
Figure 2 is a message sequence chart of the high-speed facsimile negotiation process if the facsimile terminal at the receiving side enters the facsimile transmission state at first in the prior art.
Figure 3 is a message sequence chart of the high-speed facsimile negotiation process in accordance with an embodiment of the present invention.
Figure 4 is a flow chart of the high-speed facsimile negotiation process in accordance with an embodiment of the present invention.
Figure 5 is the schematic diagram of the facsimile service signal processing device in accordance with an embodiment of the present invention.

### Detailed description of the invention

In order to make the technological scheme and the advantage of this invention clearer, this invention is hereinafter described in detail with reference to the accompanying drawings and the embodiments.

According to the embodiment of the present invention, the V.34 facsimile terminals at the transmitting side and receiving side are led to enter the common facsimile procedure through adjusting the negotiation process of the V.34 facsimile, thereby securing that the high-speed facsimile service can be transmitted in the network in the T.38 mode, improving the reliability of the high-speed facsimile service transmission.

As can be seen from the above-mentioned negotiation process of the high-speed facsimile, the V.34 facsimile terminal at the receiving side initiates the high-speed facsimile negotiation through transmitting the ANsam or /ANsam signal, and if the negotiation fails, reinitiates the negotiation through transmitting a DIS with the high-speed ability sign to indicating that it is a V.34 facsimile terminal. Therefore, it is necessary to perform corresponding processing to the ANsam or /ANsam signal and the DIS signal transmitted by the V.34 facsimile terminal at the receiving side, thus leading the facsimile terminals of two sides to entering the common facsimile procedure.

The processing to the ANSam or /ANSam signal includes: if detecting the ANSam or /ANSam signal on the gateway of the communication network, deleting the ANSam or /ANSam signal from the data stream, thereby preventing the facsimile terminal at the transmitting side from entering the high-speed negotiation procedure after receiving the ANSam or /ANSam signal.

The processing to the DIS with the high-speed ability sign is: since all gateways supporting T.38 protocol possess the ability of detecting DIS, when detecting the DIS, the gateway should analyze the high-speed ability sign contained in the DIS, and if the high-speed ability sign is valid, the gateway will modify the sign to an invalid sign and then send the DIS with the invalid high-speed ability sign to the facsimile terminal at the transmitting side.

After the above-mentioned processing to the ANSam or /ANSam signal and DIS signal, the V.34 facsimile terminal at the transmitting side is unable to receive the ANSam or /ANSam signal, and the received high-speed ability sign contained in the DIS is invalid. Therefore, the V.34 facsimile terminal at the side takes the V.34 facsimile terminal at the receiving side as a standard G3 facsimile terminal, rather than a V.34 facsimile terminal, returns a digital command signal (DCS) to the facsimile terminal at the receiving side, and enters the common facsimile procedure supporting T.38 protocol to transmit the facsimile service.

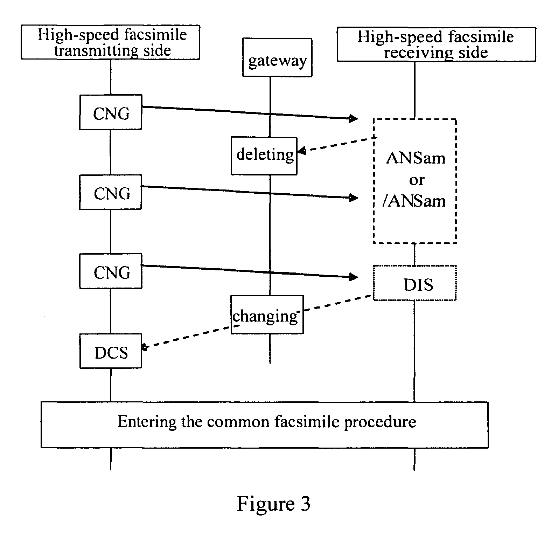

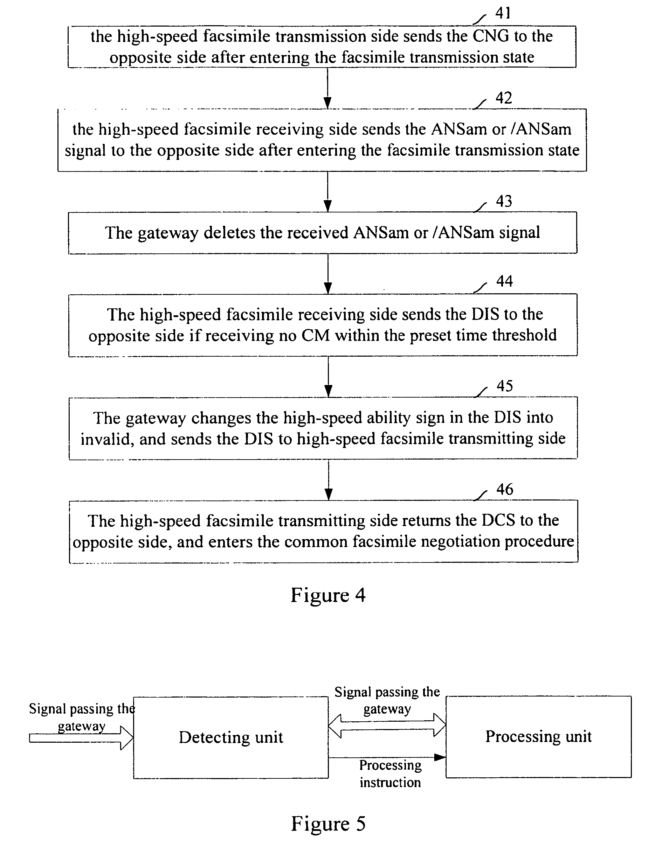

Based on the above-mentioned analysis, the method in an embodiment of the present invention, as shown in Figure 3 and Figure 4, mainly includes the following steps:
Step 41: After entering the facsimile transmission state, the facsimile terminal at the transmitting side sends a CNG signal to facsimile terminal at the opposite side (namely the V.34 facsimile receiving side).
Step 42: After receiving the CNG signal, the V.34 facsimile terminal at the receiving side sends an ANSam or /ANSam signal to the facsimile terminal at the transmitting side.
Step 43: After receiving the ANSam or /ANSam signal, the gateway of the communication network deletes the ANsam or /ANsam signal from the data stream.

Because of the special processing on the gateway, the facsimile terminal at the transmitting side is unable to receive the ANSam or /ANSam signal, and can not enter the high-speed facsimile negotiation procedure, that is, the facsimile terminal at the transmitting side will not send a CM signal to the facsimile terminal at the receiving side. Instead, the facsimile terminal at the transmitting side sends a CNG signal continually to the facsimile terminal at the opposite side.

Step 44: If the V.34 facsimile terminal at the receiving side has not received the CM signal within the preset time threshold, it will send a DIS signal to the facsimile transmitting side with the valid high-speed ability sign.

Step 45: After receiving the DIS signal, the gateway of the communication network modifies the high-speed ability sign contained in the DIS signal into invalid, and sends the modified DIS signal to the facsimile transmitting side.

The high-speed ability sign contained in the DIS signal that the V.34 facsimile terminal at the receiving side transmitted is valid, namely the value of the high-speed ability sign contained in the DIS signal is 1. The high-speed ability sign is modified into invalid in the gateway, namely the value of the high-speed ability sign contained in the modified DIS is set as 0.

Step 46: The V.34 facsimile terminal at the transmitting side will receive the DIS with the invalid high-speed ability sign due to the special processing on the gateway.

Step 47: After receiving the DIS with the invalid high-speed ability sign, the facsimile terminal at the transmitting side returns the DCS to the opposite side, and enters the common facsimile negotiation procedure supported by the T.38 protocol, thus entering the common facsimile procedure to transmit the high-speed facsimile service.

Through the above-mentioned processing to the negotiation procedure of the high-speed facsimile service, the high-speed facsimile service can enter the common facsimile procedure supported by the T.38 protocol to be processed, thereby securing the reliability of high-speed facsimile service transmission.

Based on the above-mentioned idea, the present invention also provides a facsimile service signal processing device on the gateway, as shown in Figure 5, including a detecting unit and a processing unit.

The detecting unit detects the signal passing the gateway, and when detecting the ANSam or /ANSam signal, sends a first processing instruction and the detected signal to the processing unit. The processing unit deletes the detected ANSam or /ANSam signal according to the first processing instruction. When the detecting unit detects the DIS signal, sends a second processing instruction and the detected signal to the processing unit. The processing unit sets the high-speed ability sign contained in the DIS as invalid according to the second processing instruction, then outputs the processed DIS signal.

Although this facsimile service signal processing device and the gateway belong to the same logical entity, the device may or may not be located at the same physical entity with the gateway. For example, the device can detect and process the facsimile service signal that pass the gateway under the remote control.

If the device and the gateway are located at the same physical entity, the gateway may include a detecting unit and a processing unit which have the same function with those corresponding units of the above-mentioned facsimile service signal processing device respectively.

In summary, in order to realize this invention, it is needed to change the signal with the characteristic of the high-speed facsimile service transmitted by the high-speed facsimile receiving side to the signal with the characteristic of the common facsimile service on the gateway, and make the V.34 facsimile terminal at the transmitting side unable to know the facsimile terminal at the opposite side is a V.34 facsimile terminal, thereby leading that the V.34 facsimile terminal at the transmitting side enters the common facsimile negotiation procedure to carry on the facsimile service with the opposite side. Therefore, the high-speed facsimile service can enter the common facsimile procedure supported by the T.38 protocol, thereby improving the reliability of the high-speed facsimile service transmission.

The foregoing is only the preferred embodiments of the present invention and is not intended to limit the scope of the present invention. Any modification, equivalent substitution, or improvement made without departing from the principle of the present invention should be covered by the scope set forth in the appended claims.

## Claims

1. A method for realizing a facsimile service, wherein a facsimile terminal at a transmitting side negotiates with a facsimile terminal at a receiving side via a gateway, **characterized in that** the method comprises:
upon receiving, at the gateway, a signal of a high-speed facsimile service transmitted by the facsimile terminal at the receiving side to the facsimile terminal at the transmitting side, changing, by the gateway, the signal of the high-speed facsimile service to a signal of a facsimile service supported by a T.38 protocol;
sending, by the facsimile terminal at the transmitting side to the facsimile terminal at the receiving side, the facsimile by adopting the T.38 facsimile procedure according to the received signal of the T.38 facsimile service.

2. The method according to Claim 1, wherein said changing by the gateway the signal of the high-speed facsimile service to the signal of the common facsimile service comprises:
upon receiving an amplitude-modulated answer tone ANSam signal or an amplitude-modulated answer tone with phase reversals /ANSam signal transmitted by the facsimile terminal at the receiving side, deleting, by the gateway, the ANSam or /ANSam signal;
reinitiating negotiation, by the facsimile terminal at the receiving side, through transmitting a digital identification signal (DIS)with a high-speed ability sign;
upon receiving the DIS transmitted by the high-speed facsimile terminal at the receiving side, changing, by the gateway, the high-speed ability sign contained in the DIS into invalid, and sending the changed DIS to the facsimile terminal at the transmitting side.

3. The method according to Claim 2, wherein said changing by the gateway the high-speed ability sign into invalid comprises: setting, by the gateway, the value of the high-speed ability sign contained in the DIS as 0.

4. The method according to Claim 2, further comprising:
after receiving the ANSam or /ANSam signal, forwarding, by the gateway, an instruction signal CNG transmitted by the facsimile terminal at the transmitting side to the high-speed facsimile terminal at the receiving side before deleting the ANSam or /ANSam signal.

5. The method according to any of Claims 2 to 4, wherein sending by the facsimile terminal at the transmitting side to the facsimile terminal at the receiving side, the facsimile by adopting the T.38 facsimile procedure according to the received signal of the T.38 facsimile service comprises:
upon receiving the DIS with the invalid high-speed ability sign, entering, by a facsimile terminal at the transmitting side, the T.38 facsimile negotiation procedure, and sending, by the facsimile terminal at the transmitting side to the facsimile terminal at the receiving side, the facsimile to be sent by adopting the T.38 facsimile procedure.

6. A facsimile service signal processing device, applied for a facsimile terminal at a transmitting side negotiating with a facsimile terminal at a receiving side via a gateway, **characterized in that** the device comprises:
a detecting unit adapted to detect a signal passing the gateway, and if detecting a signal of the high-speed facsimile service transmitted by the high-speed facsimile terminal at the receiving side to the facsimile terminal at the transmitting side, send a processing instruction and the signal of the high-speed facsimile service to a processing unit;
the processing unit adapted to change the signal of high-speed facsimile service into a signal of the facsimile service supported by a T.38 protocol upon receiving the processing instruction of the detecting unit and the signal of the high-speed facsimile service.

7. The device according to Claim 6, wherein said detecting unit is adapted to send a first processing instruction and an ANSam or a /ANSam signal to the processing unit if detecting that the signal of the high-speed facsimile service is the ANSam or the /ANSam signal;
the processing unit is adapted to delete the ANSam or the /ANSam signal upon receiving the first processing instruction.

8. The device according to Claim 6, wherein said detecting unit is adapted to send a second processing instruction and a DIS to the processing unit if detecting that the signal of the high-speed facsimile service is the DIS;
the processing unit is adapted to set the value of the high-speed ability sign contained in the DIS as invalid and outputs the DIS to the facsimile terminal at the transmitting side.

9. The device according to Claim 6, 7 or 8, wherein the device is located at the same physical entity with the gateway or a physical entity independent to the gateway.

10. A gateway, **characterized in that** the gateway comprises a facsimile service signal processing device as defined in any one of Claims 6 to 9.

## Patentansprüche

1. Verfahren zur Implementierung eines Faxdienstes, wobei ein sendeseitiges Faxgerät über ein Gateway mit einem empfangsseitigen Faxgerät verhandelt, **dadurch gekennzeichnet, dass**
nachdem ein vom empfangsseitigen Faxgerät an das sendeseitige Faxgerät übertragenes Signal eines Hochgeschwindigkeits-Faxdienstes am Gateway empfangen worden ist, dieses Signal des Hochgeschwindigkeits-Faxdienstes durch das Gateway in ein Signal eines durch ein T.38 Protokoll unterstützten Faxdienstes umgewandelt wird;
die Faxmitteilung vom sendeseitigen Faxgerät an das empfangsseitige Faxgerät mittels der gemäß dem empfangenen Signal des T.38 Faxdienstes übernommenen T.38 Faxprozedur übertragen wird.

2. Verfahren nach Anspruch 1, wobei die Umwandlung des Signals des Hochgeschwindigkeits-Faxdienstes in das Signal des herkömmlichen Faxdienstes durch das Gateway aufweist:
nach Empfang eines vom empfangsseitigen Faxgerät übertragenen ANSam-Signals (amplitudenmodulierten Antworttonsignals) oder /ANSam-Signals (amplitudenmodulierten Antworttonsignal mit Phasenumkehr), Löschung des ANSam- oder /ANSam-Signals durch das Gateway;
erneute Initialisierung der Verhandlung durch das empfangsseitige Faxgerät durch Übertragung eines Digitalen Identifizierungssignals (DIS) mit einem Hochgeschwindigkeitsfähigkeits-Zeichen;
nach Empfang des vom empfangsseitigen Hochgeschwindigkeits-Faxgerät übertragenen DIS, Umwandlung des im DIS enthaltenen Hochgeschwindigkeitsfähigkeits-Zeichen in "ungültig" und Übertragung des umgewandelten DIS an das sendeseitige Faxgerät durch das Gateway.

3. Verfahren nach Anspruch 2, wobei die Umwandlung des im DIS enthaltenen Hochgeschwindigkeitsfähigkeits-Zeichen in "ungültig" durch das Gateway aufweist: Setzen des Werts des im DIS enthaltenen Hochgeschwindigkeitsfähigkeits-Zeichen durch das Gateway auf 0.

4. Verfahren nach Anspruch 2, welches weiterhin aufweist:
nach Empfang des ANSam- oder /ANSam-Signals, Weiterleitung eines vom sendeseitigen Faxgerät an das empfangsseitige Hochgeschwindigkeits-Faxgerät übertragenen Befehlssignals CNG durch das Gateway vor dem Löschen des ANSam- oder /ANSam-Signals.

5. Verfahren nach einem der Ansprüche 2 bis 4, wobei die Übertragung der Faxmitteilung vom sendeseitigen Faxgerät an das empfangsseitige Faxgerät mittels der gemäß dem empfangenen Signal des T.38 Faxdienstes übernommenen T.38 Prozedur aufweist:
nach Empfang des DIS mit dem ungültigen Hochgeschwindigkeitsfähigkeits-Zeichen, Eintritt durch ein sendeseitiges Faxgerät in die T.38 Fax-Verhandlungsprozedur und Übertragung der zu übertragenden Faxmitteilung vom sendeseitigen Faxgerät an das empfangsseitige Faxgerät mittels der T.38 Faxprozedur.

6. Faxdienstsignal-Verarbeitungsgerät, verwendet für ein mit einem empfangsseitigen Faxgerät über ein Gateway verhandelndes sendeseitiges Faxgerät, **dadurch gekennzeichnet, dass** das Gerät aufweist:
eine Erkennungseinheit, die dazu ausgebildet ist, ein das Gateway durchlaufendes Signal zu erkennen und bei Erkennung eines vom empfangsseitigen Hochgeschwindigkeits-Faxgerät zum sendeseitigen Faxgerät übertragenen Signals des Hochgeschwindigkeits-Faxdienstes einen Verarbeitungsbefehl und das Signal des Hochgeschwindigkeits-Faxdienstes an eine Verarbeitungseinheit zu übertragen;
eine Verarbeitungseinheit, die dazu ausgebildet ist, nach Empfang des Verarbeitungsbefehls der Erkennungseinheit und des Signals des Hochgeschwindigkeits-Faxdienstes dieses Signal in ein Signal des durch ein T.38 Protokoll unterstützen Faxdienstes umzuwandeln.

7. Gerät nach Anspruch 6, wobei die Erfassungseinheit dazu ausgebildet ist, einen ersten Verarbeitungsbefehl und ein ANSam- oder /ANSam-Signal an die Verarbeitungseinheit zu übertragen, wenn sie erkennt, dass das Signal des Hochgeschwindigkeits-Faxdienstes das ANSam- oder /ANSam-Signal ist;
die Verarbeitungseinheit dazu ausgebildet ist, das ANSam- oder /ANSam-Signal nach Empfang des ersten Verarbeitungsbefehls zu löschen.

8. Gerät nach Anspruch 6, wobei die Erfassungseinheit dazu ausgebildet ist, einen zweiten Verarbeitungsbefehl und ein DIS an die Verarbeitungseinheit zu übertragen, wenn sie erkennt, dass das Signal des Hochgeschwindigkeits-Faxdienstes das DIS ist;
die Verarbeitungseinheit dazu ausgebildet ist, den Wert des im DIS enthaltenen Hochgeschwindigkeitsfähigkeits-Zeichens auf "ungültig" zu setzen und das DIS an das sendeseitige Faxgerät auszugeben.

9. Gerät nach Anspruch 6, 7 oder 8, wobei es in der gleichen physikalischen Umgebung mit dem Gateway oder einer vom Gateway unabhängigen physikalischen Umgebung angeordnet ist.

10. Gateway, **dadurch gekennzeichnet, dass** es ein Faxdienstsignal-Verarbeitungsgerät nach einem der Ansprüche 6 bis 9 aufweist.

## Revendications

1. Procédé de mise en oeuvre d'un service de télécopie, où une borne de télécopie à un côté transmission négocie avec une borne de télécopie à un côté réception par une passerelle, **caractérisé en ce que** le procédé comprend:
lors de la réception, à la passerelle, d'un signal d'un service de télécopie haute vitesse transmis par le terminal de télécopie au côté réception au terminal de télécopie au côté transmission, changer, par la passerelle, le signal du service de télécopie haute vitesse en un signal d'un service de télécopie supporté par un protocole T.38;
transmettre, par la borne de télécopie au côté transmission à la borne de télécopie au côté réception, la télécopie en adoptant la procédure de télécopie T.38 en accord avec le signal reçu du service de télécopie T.38.

2. Procédé selon la revendication 1, où ledit changement par la passerelle du signal du service de télécopie haute vitesse en signal de service de télécopie commun comprend:
lors de la réception d'un signal ANSam de ton de réponse modulé en amplitude ou d'un signal d'un ton de réponse modulé en amplitude avec inversions de phase/signal ANSam transmis par la borne de télécopie au côté réception, effacer, par la passerelle, de ANSam ou/le signal ANSam;
réinitier la négociation, par la borne de télécopie au côté réception, par la transmission d'un signal d'identification numérique (DIS) avec un signe de capacité haute vitesse;
lors de la réception du DIS transmis par la borne de télécopie haute vitesse au côté réception, changer, par la passerelle, le signe de capacité haute vitesse contenu dans le DIS en invalide, et transmettre le DIS changé à la borne de télécopie au côté transmission.

3. Procédé selon la revendication 2, où ledit changement par la passerelle du signe de capacité haute vitesse en invalide comprend: régler, par la passerelle, la valeur du signe de capacité haute vitesse se trouvant dans le DIS à 0.

4. Procédé selon la revendication 2, comprenant en outre:
après la réception du ANSam ou signal/ANSam, transmettre, par la passerelle, un signal d'instruction CNG transmis par la borne de télécopie au côté transmission à la borne de télécopie haute vitesse au côté réception avant l'effacement du ANSam ou signal/ANSam.

5. Procédé selon l'une quelconque des revendications 2 à 4, où l'émission, par la borne de télécopie au côté transmission à la borne de télécopie au côté réception, la télécopie, en adoptant la procédure de télécopie T.38 selon le signal reçu du service de télécopie T.38 comprend:
lors de la réception du DIS avec le signe de capacité haute vitesse invalide, entrer, par une borne de télécopie au côté réception, la procédure de négociation de télécopie T.38, et transmettre, par la borne de télécopie au côté transmission à la borne de télécopie au côté réception, la télécopie à transmettre en adoptant la procédure de télécopie T.38.

6. Dispositif de traitement de signal de service de télécopie appliqué à une borne de télécopie à un côté transmission négociant avec une borne de télécopie à un côté réception par une passerelle, **caractérisé en ce que** le dispositif comprend:
une unité de détection apte à détecter un signal passant sur la passerelle, et si elle détecte un signal du service de télécopie haute vitesse transmis par la borne de télécopie haute vitesse au côté réception à la borne de télécopie au côté transmission, transmettre une instruction de traitement et le signal du service de télécopie haute vitesse à une unité de traitement;
l'unité de traitement étant apte à changer le signal du service de télécopie haute vitesse en un signal du service de télécopie supporté par un protocole T.38 lors de la réception de l'instruction de traitement de l'unité de détection et du signal du service de télécopie haute vitesse.

7. Dispositif selon la revendication 6, où ladite unité de détection est apte à transmettre une première instruction de traitement et un ANSam ou un signal/ANSam à l'unité de traitement si elle détecte que le signal du service de télécopie haute vitesse est le ANSam ou le signal/ANSam;
l'unité de traitement est apte à effacer le ANSam ou le signal/ANSam lors de la réception de la première instruction de traitement.

8. Dispositif selon la revendication 6, où ladite unité de détection est conçue pour transmettre une deuxième instruction de traitement et un DIS à l'unité de traitement si elle détecte que le signal du service de télécopie haute vitesse est le DIS;
l'unité de traitement est conçue pour régler la valeur du signe de capacité haute vitesse contenu dans le DIS comme invalide et émet le DIS à la borne de télécopie au côté transmission.

9. Dispositif selon la revendication 6, 7 ou 8, où le dispositif se situe à la même entité physique avec la passerelle ou une entité physique indépendante de la passerelle.

10. Passerelle, **caractérisée en ce que** la passerelle comprend un dispositif de traitement de signal de service de télécopie tel que défini dans l'une quelconque des revendications 6 à 9.
